# EUROPEAN PATENT SPECIFICATION

(11) **EP 4 471 075 B1**
(45) Date of publication and mention of the grant of the patent: **29.07.2026**
(21) Application number: 23868570.5
(22) Date of filing: 19.09.2023
(51) Int. Cl.: H01M 4/134, H01M 10/052, C08G 61/12, C08L 65/00, C09D 165/00, H01M 4/36, H01M 4/38, H01M 4/62

(54) **CROSSLINKED POLYTHIOPHENE COMPOUNDS, SULFUR-CARBON COMPOSITE, LITHIUM-SULFUR BATTERY, AND METHOD OF MANUFACTURING THE SULFUR-CARBON COMPOSITE**
VERNETZTE POLYTHIOPHENVERBINDUNGEN, SCHWEFEL-KOHLENSTOFF-VERBUNDMATERIAL, LITHIUM-SCHWEFEL-BATTERIE UND VERFAHREN ZUR HERSTELLUNG EINES SCHWEFEL-KOHLENSTOFF-VERBUNDMATERIALS
COMPOSÉS POLYTHIOPHÈNE RÉTICULÉS, COMPOSITE SOUFRE-CARBONE, BATTERIE LITHIUM-SOUFRE, ET PROCÉDÉ DE FABRICATION D'UN COMPOSITE SOUFRE-CARBONE

(30) Priority: 20.09.2022 KR 20220118937
(43) Date of publication of application: 04.12.2024
(73) Proprietor: LG Energy Solution, Ltd., Seoul 07335 (KR); Seoul National University R&DB Foundation, Seoul 08826 (KR)
(72) Inventor: KIM, Soo-Hyun, Daejeon 34122 (KR); LEE, Jong-Chan, Seoul 08830 (KR); KIM, Ki-Hyun, Daejeon 34122 (KR); SOHN, Kwon-Nam, Daejeon 34122 (KR); KOONG, Chan-Yeong, Seoul 08789 (KR); JEONG, Da-Un, Seoul 01417 (KR); HONG, Dong-Gi, Seoul 08792 (KR)
(74) Representative: Goddar, Heinz J.
(86) International application number: PCT/KR2023/014204
(87) International publication number: WO 2024/063518

(56) References cited:
- WO-A1-2015/054484
- CN-A- 1 911 981
- CN-A- 109 256 554
- KR-A- 20220 020 118
- US-A- 5 276 102
- GADGIL BHUSHAN, DAMLIN PIA, ÄÄRITALO TIMO, KANKARE JOUKO, KVARNSTRÖM CARITA: "Electrosynthesis and characterization of viologen cross linked thiophene copolymer", ELECTROCHIMICA ACTA, ELSEVIER, AMSTERDAM, NL, vol. 97, 1 May 2013 (2013-05-01), AMSTERDAM, NL , pages 378 - 385, XP093148831, ISSN: 0013-4686, DOI: 10.1016/j.electacta.2013.03.002
- LAN MINHUAN, ZHAO SHAOJING, XIE YUSHENG, ZHAO JUNFANG, GUO LIANG, NIU GUANGLE, LI YING, SUN HONGYAN, ZHANG HONGYAN, LIU WEIMIN, ZH: "Water-Soluble Polythiophene for Two-Photon Excitation Fluorescence Imaging and Photodynamic Therapy of Cancer", APPLIED MATERIALS & INTERFACES, AMERICAN CHEMICAL SOCIETY, US, vol. 9, no. 17, 3 May 2017 (2017-05-03), US , pages 14590 - 14595, XP093148832, ISSN: 1944-8244, DOI: 10.1021/acsami.6b15537

## Description

### TECHNICAL FIELD

The present disclosure relates to a crosslinked polythiophene compound capable of capturing polysulfide leaking out from a positive electrode to improve battery life and a battery comprising the same.

### BACKGROUND ART

With the technology development and growing demand for mobile devices, there is a growing demand for secondary batteries as an energy source, and among secondary batteries, lithium secondary batteries are brought to market and being widely used due to high energy density and working potential, long cycle life and low self-discharge rate.

Recently, with the rising interest in environmental issues, many studies are being conducted on electric vehicles (EV) and hybrid electric vehicles (HEV) as an alternative to vehicles using fossil fuels such as gasoline vehicles and diesel vehicles that are regarded as one of the main causes of air pollution. Lithium secondary batteries having high energy density, high discharge voltage and output stability are mainly studied and used as a power source of electric vehicles and hybrid electric vehicles.

Lithium secondary batteries have a structure in which an electrode assembly includes a positive electrode and a negative electrode, each electrode including an electrode current collector and an active material coated on the electrode current collector, with a porous separator interposed between the positive electrode and the negative electrode, and a nonaqueous electrolyte comprising a lithium salt is wetted to the electrode assembly.

At the present time, the lithium secondary battery market is governed by technology based on pairing of lithium cobalt oxide LiCoO₂ at the positive electrode and graphite at the negative electrode. The rated voltage of lithium secondary batteries is about 3.6V, while the rated voltage of most of other types of batteries (Ni-Cd, Ni-MH, etc.) is 1.5V. The energy density per volume and the energy density per mass are about 300 to 500 Wh/l and 160 to 200 Wh/kg, respectively. This value is the highest value among all the batteries now in the market. Additionally, this type of batteries has low self-discharge and long life (500 or 1000 cycles). Despite the surprising performance achievement, there is not much difference in performance between all the current lithium ion batteries, and it is foreseen that improvement will take place only to a very limited extent.

Accordingly, lithium-sulfur (Li-S) batteries are emerging as an alternative to the known lithium ion batteries.

In the same way as lithium ion secondary batteries, lithium-sulfur batteries work by lithium ions moving in the electrolyte between the positive electrode and the negative electrode. However, since lithium-sulfur batteries simply use sulfur, as opposed to lithium ion secondary batteries designed to store energy by intercalation reaction of lithium ions into molecules of the electrode active material, inducing changes in electrode structure, lithium-sulfur batteries work based on oxidation and reduction reaction between sulfur and lithium ions. Accordingly, compared to lithium ion secondary batteries, lithium-sulfur batteries may have theoretically higher capacity at the equal volume without limitations on the electrode structure. Due to this feature, in lithium-sulfur batteries comprising the sulfur positive electrode and the lithium metal negative electrode, when it is assumed that elemental sulfur (S₈) having ring structure is completely reduced to lithium sulfide (Li₂S), the theoretical capacity is 1,675 mAh/g and the theoretical energy density is 2,600 Wh/kg that are higher 3 times to 6 times than the existing other battery systems (Ni/MH batteries: 450 Wh/kg, Li/FeS: 480 Wh/kg, Li/MnO₂: 1,000 Wh/kg, Na/S: 800 Wh/kg).

On the other hand, the existing transition metal oxide based lithium ion secondary batteries may be thought to be batteries comprising materials that are the sources of heavy metal contamination since they comprise oxides of nickel (Ni), cobalt (Co) and manganese (Mn) having higher density than the density of heavy metal (5 g/mL or more of metal) in the positive electrode. However, lithium-sulfur batteries are free of materials causing contamination and comprise nontoxic materials, and from this perspective, they are considered to be eco-friendly. Additionally, the positive electrode material, sulfur, is abundant on Earth and inexpensive.

Meanwhile, in lithium-sulfur batteries, reduction reaction of sulfur and oxidation reaction of lithium metal occurs during discharging, and in this instance, sulfur forms lithium polysulfide (LiPS) of linear structure from S₈ of ring structure, and lithium-sulfur batteries show stepwise discharge voltage until the lithium polysulfide is completely reduced to Li₂S. However, while lithium-sulfur batteries are charged/discharged, charge/discharge efficiency reduces and battery life degrades. As described above, life degradation of lithium-sulfur batteries is caused by many different factors such as side reaction of electrolyte solutions, instability of lithium metal, and accumulation of positive electrode by-products (for example, dissolution of lithium polysulfide from the positive electrode).

That is to say, in lithium-sulfur batteries using the sulfur based compound for the positive electrode active material and alkaline metal such as lithium for the negative electrode active material, dissolution of lithium polysulfide occurs during charging/discharging, and the lithium polysulfide leaking from the positive electrode migrates to the negative electrode, which reduces the capacity of the lithium-sulfur batteries and shortens the life of the lithium-sulfur batteries. That is to say, since the lithium polysulfide leaking from the positive electrode has high solubility in the electrolyte solution, the lithium polysulfide may unintentionally migrate to the negative electrode through the separator via the electrolyte solution, causing irreversible loss of the positive electrode active material and the consequential capacity fading, and sulfur particle accumulation on lithium metal surface induced by side reaction, resulting in shorter battery life.

To solve the life reduction problem caused by lithium polysulfide, in the technical field, studies have been conducted on the addition of reaction mitigating materials to the negative electrode to prevent side reaction on lithium metal surface, but did not produce meaningful outcomes.

KR 20220020118 A discloses a sulfur-carbon composite, comprising a porous carbon material; a coating layer disposed on at least one surface of the porous carbon material, and comprising a polythiophene compound; and a sulfur compound present in at least a portion of the surface of the porous carbon material or inside of pores of the porous carbon material, or a surface of the coating layer.

### SUMMARY

### Technical Problem

An embodiment of the present disclosure is directed to providing a crosslinked polythiophene compound capable of capturing lithium polysulfide leaking from a positive electrode to improve the life of a lithium-sulfur battery.

Another embodiment of the present disclosure is directed to providing a sulfur-carbon composite capable of capturing lithium polysulfide leaking from the positive electrode to improve the life of a lithium-sulfur battery.

Another embodiment of the present disclosure is directed to providing a lithium-sulfur battery comprising the sulfur-carbon composite.

Another embodiment of the present disclosure is directed to providing a method of manufacturing the sulfur-carbon composite.

### Technical Solution

To solve the above-described problem of the present disclosure, there are provided a crosslinked polythiophene compound, a sulfur-carbon composite, a lithium-sulfur battery and a method of manufacturing a sulfur-carbon composite according to the following embodiments.

According to a first embodiment, there is provided the crosslinked polythiophene compound having a crosslinking structure and comprising a cationic functional group, wherein the crosslinked polythiophene compound is represented by the following Formula 1. 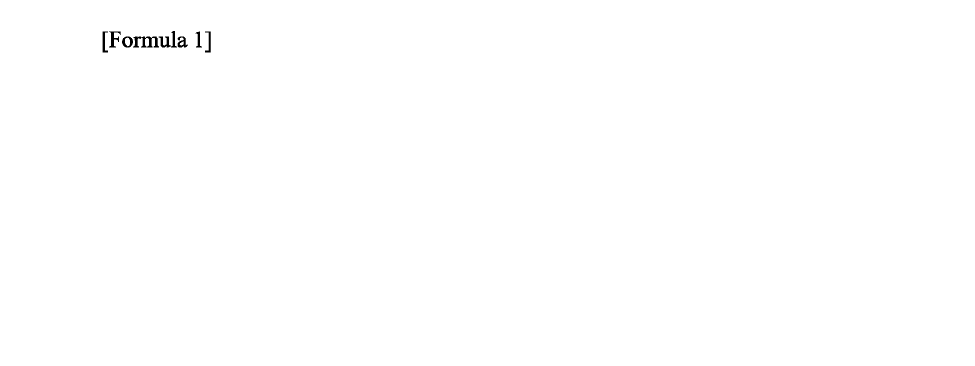 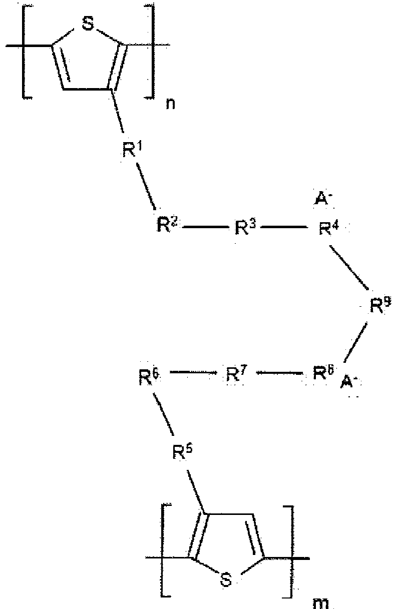 wherein in the Formula 1, each of R¹, R³, R⁵, R⁷ and R⁹ is independently an alkylene group having 1 to 10 carbon atoms, a cycloalkylene group having 3 to 10 carbon atoms, or an arylene group having 6 to 20 carbon atoms, each of R² and R⁶ is independently an alkylene group having 1 to 10 carbon atoms, a cycloalkylene group having 3 to 10 carbon atoms, an arylene group having 6 to 20 carbon atoms or a -COO- group, R⁴ and R⁸ are -NR¹⁰R¹¹, and each of R¹⁰ and R¹¹ is independently hydrogen, an alkyl group having 1 to 10 carbon atoms, a cycloalkyl group having 3 to 10 carbon atoms, or an aryl group having 6 to 20 carbon atoms, A is F, Cl, Br, or I, and each of n and m is independently 1 to 1,000,000.

The crosslinked polythiophene compound may be represented by the following Formula 2. 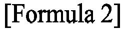 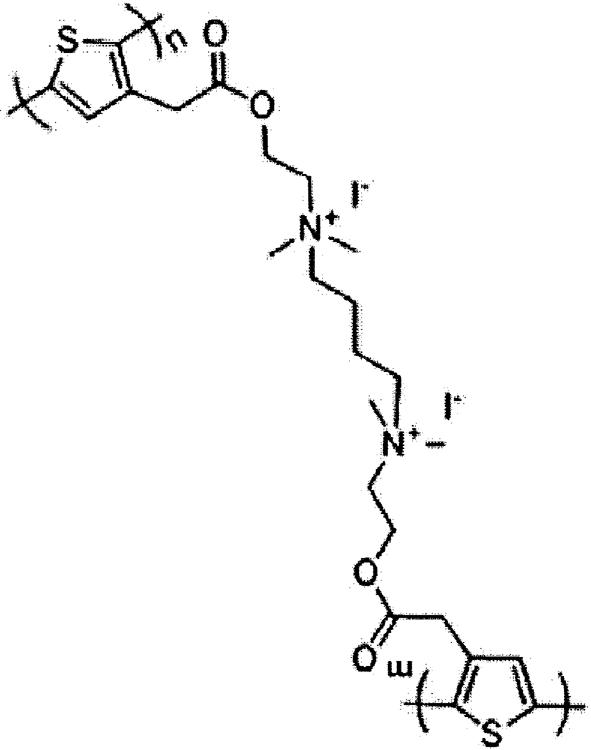 wherein in the Formula 2, each of n and m is independently 1 to 1,000,000.

According to a further embodiment, there is provided a sulfur-carbon composite comprising a porous carbon material; a coating layer disposed on at least one surface of the porous carbon material, and comprising the crosslinked polythiophene compound according to the invention; and a sulfur compound present in at least a portion of a surface of the porous carbon material or inside of pores of the porous carbon material, or a surface of the coating layer.

A weight ratio of the porous carbon material and the crosslinked polythiophene compound may be 99:1 to 85:15.

A weight ratio of the porous carbon material having the coating layer and the sulfur compound may be 3:7 to 4:6.

According to a further embodiment, there is provided a lithium-sulfur battery comprising a positive electrode, a negative electrode, and a separator interposed between the positive electrode and the negative electrode, wherein the positive electrode comprises the sulfur-carbon composite according to the invention.

According to a further embodiment, there is provided a method of manufacturing the sulfur-carbon composite according to the invention, the method comprising steps of introducing the polythiophene compound into a dispersion of the porous carbon material to coat the polythiophene compound on at least one surface of the porous carbon material; crosslinking the polythiophene compound coated on the porous carbon material to form the crosslinked polythiophene compound; and loading the sulfur compound into the porous carbon material coated with the crosslinked polythiophene compound, wherein the polythiophene compound is represented by the following Formula 3. 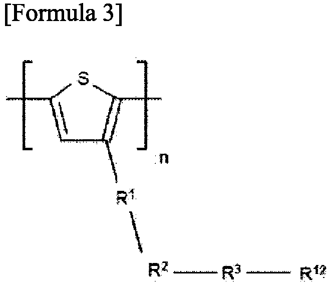 wherein in the Formula 3, each of R¹ and R³ is independently an alkylene group having 1 to 10 carbon atoms, a cycloalkylene group having 3 to 10 carbon atoms, or an arylene group having 6 to 20 carbon atoms, R² is an alkylene group having 1 to 10 carbon atoms, a cycloalkylene group having 3 to 10 carbon atoms, an arylene group having 6 to 20 carbon atoms or a -COO- group, R¹² is -NR¹⁰R¹¹, each of R¹⁰ and R¹¹ is independently hydrogen, an alkyl group having 1 to 10 carbon atoms, a cycloalkyl group having 3 to 10 carbon atoms, or an aryl group having 6 to 20 carbon atoms, and n is 1 to 1,000,000 .

The crosslinked polythiophene compound may be formed by adding a crosslinking agent to the porous carbon material coated with the polythiophene compound, and performing thermal treatment.

The crosslinking agent may comprise a dihalogenoalkane compound.

A method of preparing the polythiophene compound may comprise steps of producing a thiophene monomer having a thiophene group and a cationic functional group; introducing the thiophene monomer into the dispersion of the porous carbon material; and polymerizing the thiophene monomer.

The thiophene monomer may be polymerized in-situ on a surface of the porous carbon material.

The producing of the thiophene monomer may comprise steps of preparing a thiophene compound having an anionic functional group; causing the thiophene compound to react with chloride; and causing the thiophene compound subjected to the reaction with the chloride to react with an alcohol compound having the cationic functional group to produce the thiophene monomer.

There is provided a method of manufacturing the sulfur-carbon composite according to the invention, the method comprising steps of crosslinking the polythiophene compound to form the crosslinked polythiophene compound; loading the sulfur compound into the porous carbon material; and coating the crosslinked polythiophene compound on at least one surface of the sulfur compound loaded porous carbon material.

### Advantageous Effects

The sulfur-carbon composite of the present disclosure comprises the crosslinked polythiophene compound, and the crosslinked polythiophene compound has the cationic functional group. As the crosslinked polythiophene compound having the cationic functional group is coated on the sulfur-carbon composite, it may be possible to suppress dissolution of lithium polysulfide from the positive electrode of the lithium-sulfur battery by the cationic functional group, and mitigate volume expansion of the positive electrode during charging/discharging of the battery by the crosslinking structure of the crosslinked polythiophene compound. Accordingly, it may be possible to prevent sulfur particle accumulation on the lithium metal surface of the negative electrode, thereby maintaining the charge/discharge capacity of the lithium-sulfur battery and improving the battery life.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIGS. 1 and 2 are diagrams illustrating a method of manufacturing a sulfur-carbon composite according to example 1.
FIG. 3 is a graph showing thermogravimetric analysis (TGA) results of a sulfur-carbon composite of example 1.
FIG. 4 is a graph showing X-ray diffraction (XRD) analysis results of sulfur-carbon composites of example 1 and comparative example 1.
FIG. 5 is a graph showing Fourier transform infrared spectroscopy (FT-IR) analysis results of sulfur-carbon composites of example 1 and comparative example 1.
FIG. 6 is a graph showing transmission electron microscopy (TEM) analysis results of sulfur-carbon composites of example 1 and comparative example 1.
FIG. 7 is a graph showing scanning electron microscopy (SEM) analysis results of sulfur-carbon composites of example 1 and comparative example 1.
FIGS. 8 to 10 are graphs showing discharge capacity evaluated by charging/discharging lithium-sulfur batteries according to example 1 and comparative example 1 at 25°C.
FIG. 11 is a graph showing discharge capacity evaluated by charging/discharging lithium-sulfur batteries according to comparative example 1 and examples 2 to 4 at 25°C.
FIG. 12 is a graph showing discharge capacity evaluated by charging/discharging lithium-sulfur batteries according to example 5 and comparative example 1 at 25°C.
FIG. 13 is a Nyquist plot showing the resistance before/after cell test of lithium-sulfur batteries according to example 1 and comparative example 1.

### DETAILED DESCRIPTION

Hereinafter, the present disclosure will be described in more detail.

It should be understood that the terms or words used in the specification and the appended claims should not be construed as limited to general and dictionary meanings, but rather interpreted based on the meanings and concepts corresponding to technical aspects of the present disclosure on the basis of the principle that the inventor is allowed to define terms appropriately for the best explanation.

The term "comprise", "include" or "have" when used in this specification, specifies the presence of stated elements, but does not preclude the presence or addition of one or more other elements, unless the context clearly indicates otherwise.

The present disclosure relates to a crosslinked polythiophene compound, a sulfur-carbon composite comprising the crosslinked polythiophene compound, a lithium-sulfur battery comprising the sulfur-carbon composite, and a method of manufacturing the sulfur-carbon composite.

In the present disclosure, the electrochemical cell may include any type of battery that generates electrochemical reaction. Specific examples of the electrochemical cell include any type of primary batteries, secondary batteries, fuel cells, solar cells and capacitors such as super capacitors, or the like. In particular, the electrochemical cell may be a secondary battery, and the secondary battery may be a lithium ion secondary battery. The lithium ion secondary battery may include, for example, a lithium-metal battery, a lithium-sulfur battery, an all-solid-state battery, a lithium polymer battery and so on, and among them, a lithium-sulfur battery is preferred.

Among secondary batteries, lithium-sulfur batteries have high discharge capacity and theoretical energy density, and since sulfur used as a positive electrode active material is abundant on Earth and inexpensive, lithium-sulfur batteries require low battery manufacturing costs and are eco-friendly, so they are gaining attention as the next-generation secondary battery.

In the present disclosure, the positive electrode active material comprises a carbon-sulfur composite, and the carbon-sulfur composite comprises a porous carbon material. In the lithium-sulfur battery, since the positive electrode active material, sulfur, is nonconductive, the carbon-sulfur composite, in which a conductive material, for example, a carbon material is combined with sulfur, is commonly used to improve electrical conductivity.

According to an aspect of the present disclosure, there is provided a crosslinked polythiophene compound having a crosslinking structure and comprising a cationic functional group, wherein the crosslinked polythiophene compound is represented by the following Formula 1. 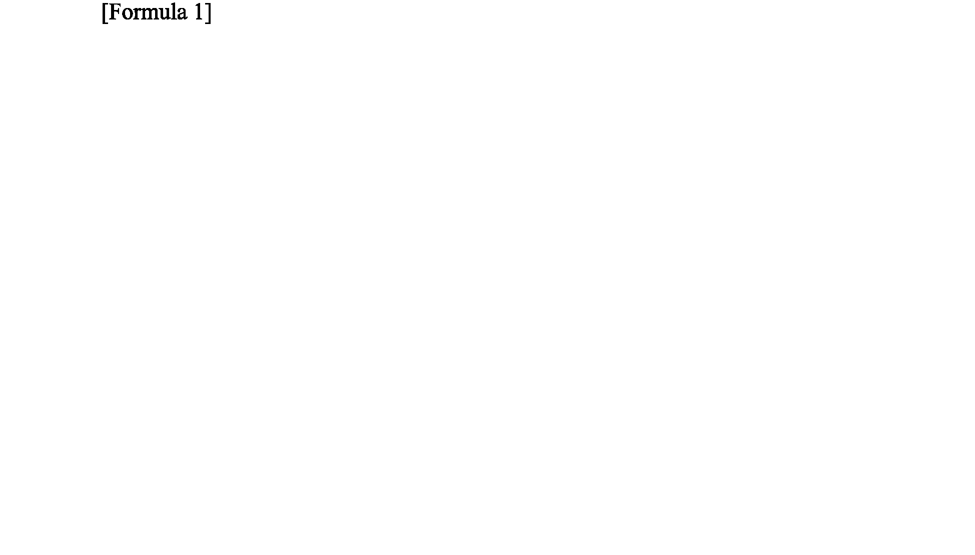 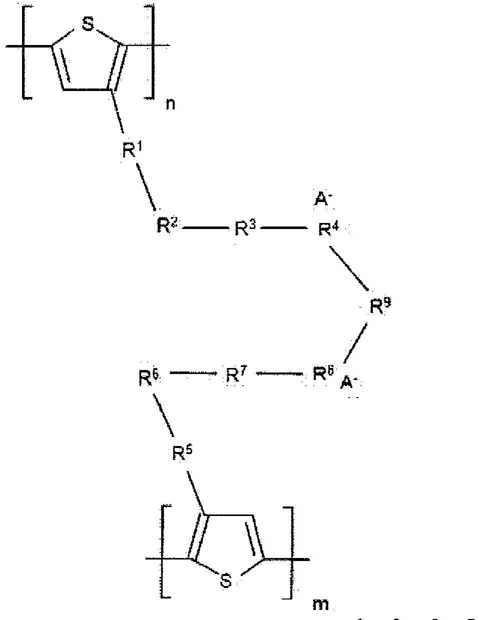 wherein in the Formula 1, each of R¹, R³, R⁵, R⁷ and R⁹ is independently an alkylene group having 1 to 10 carbon atoms, a cycloalkylene group having 3 to 10 carbon atoms, or an arylene group having 6 to 20 carbon atoms, each of R² and R⁶ is independently an alkylene group having 1 to 10 carbon atoms, a cycloalkylene group having 3 to 10 carbon atoms, an arylene group having 6 to 20 carbon atoms or a -COO- group, R⁴ and R⁸ are -NR¹⁰R¹¹, and each of R¹⁰ and R¹¹ is independently hydrogen, an alkyl group having 1 to 10 carbon atoms, a cycloalkyl group having 3 to 10 carbon atoms, or an aryl group having 6 to 20 carbon atoms, A is F, Cl, Br, or I, and each of n and m is independently 1 to 1,000,000.

In particular, when the cationic functional group is quaternary ammonium, it may be possible to make adsorption of lithium polysulfide easier than a functional group such as ethylene glycol that helps the movement of lithium.

Additionally, according to an embodiment of the present disclosure, since the crosslinked polythiophene compound has the crosslinking structure, it may be possible to improve the stiffness. In general, when batteries are charged and discharged, volume over-expansion or swelling occurs, and the compound of the present disclosure may have high stiffness, and make materials resistant to volume expansion or swelling.

According to an embodiment of the present disclosure, the polarity of the crosslinked polythiophene compound may be adjusted by adjusting the bond length of R¹, R³, R⁵, R⁷ and R⁹, and thereby the crystallinity and thermal characteristics of the crosslinked polythiophene compound may be adjusted.

According to an embodiment of the present disclosure, the crosslinked polythiophene compound may be represented by the following Formula 2.

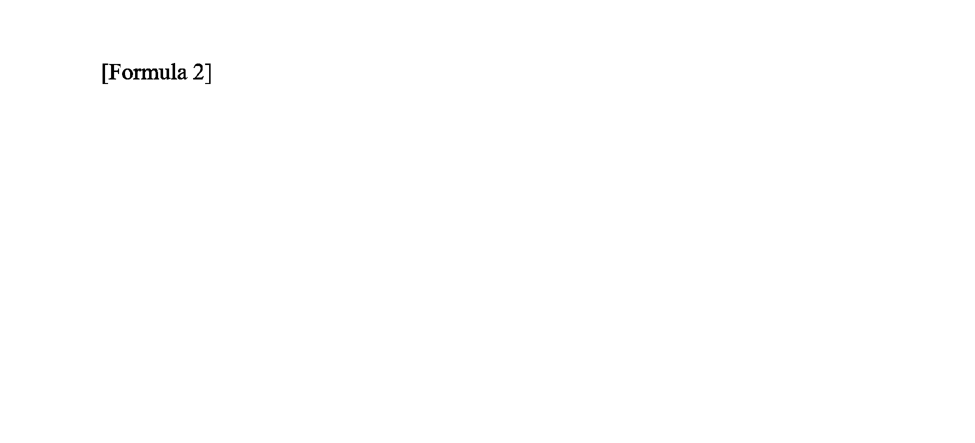

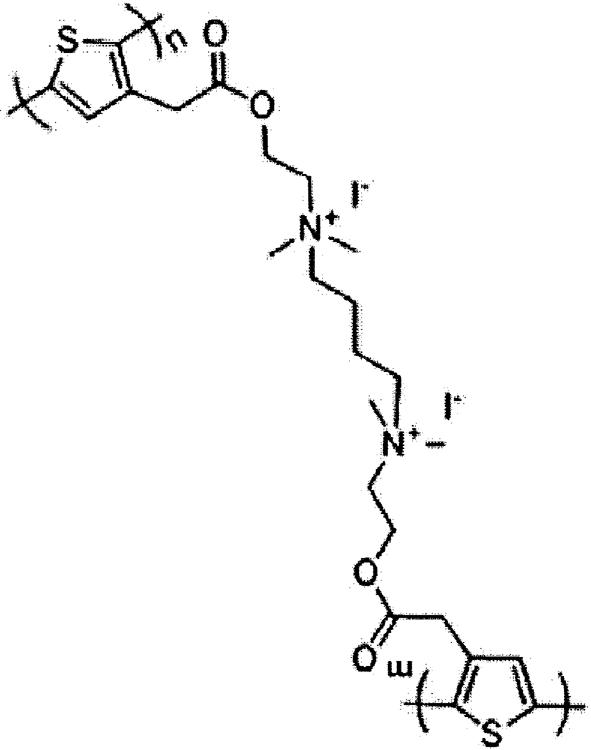

In the above Formula 2, each of n and m may be independently 1 to 1,000,000.

According to another aspect of the present disclosure, there is a sulfur-carbon composite comprising:
a porous carbon material;
a coating layer disposed on at least one surface of the porous carbon material, and comprising the above-described crosslinked polythiophene compound; and
a sulfur compound present in at least a portion of a surface or inside of pores of the porous carbon material, or a surface of the coating layer.

According to an embodiment of the present disclosure, a weight ratio of the porous carbon material and the crosslinked polythiophene compound may be 99:1 to 85:15, or 99:1 to 90:10.

The porous carbon material comprises a platy carbon material, the specific surface area of the porous carbon material may be 1,000 m²/g or more, and the pore volume of the porous carbon material may be 4 cm³/g or more.

The porous carbon material may have high specific surface area to increase active sites of sulfur participating in oxidation/reduction reaction. Additionally, the porous carbon material may have high pore volume to ensure high sulfur loading and sufficient ion diffusion paths.

The sulfur-carbon composite comprises the porous carbon material as a host for loading the sulfur containing compound. Specifically, the sulfur-carbon composite may comprise a platy porous carbon material as the porous carbon material. The platy porous carbon material may comprise, for example, graphene, graphene oxide, reduced graphene oxide (rGO) or a mixture thereof.

In an embodiment of the present disclosure, the platy porous carbon material may comprise reduced graphene oxide alone.

The porous carbon material may have the specific surface area of 1,000 m²/g or more. Specifically, the upper limit of the Brunauer-Emmett-Teller (BET) specific surface area of the porous carbon material is not limited to a particular range, and may be, for example, 1,000 m²/g or more and 1,500 m²/g or less, 1,300 m²/g or less, 1,200 m²/g or less, 1,100 m²/g or less, or 1,050 m²/g or less. The sulfur-carbon composite according to an embodiment of the present disclosure may comprise a plurality of micropores on the outer surface and/or inside thereof and have a very high specific surface area.

The BET specific surface area may be measured by the BET method, and indicate a value measured by the known method for measuring the BET specific surface area. For example, the BET specific surface area may be a value calculated from the adsorption amount of nitrogen gas under the liquid nitrogen temperature (77K) using BEL Japan's BELSORP-max.

The porous carbon material may have the pore volume of 4 cm³/g or more. Specifically, the upper limit of the pore volume of the porous carbon material is not limited to a particular range, and may be, for example, 4 cm³/g or more and 15 cm³/g or less, 6 cm³/g or more and 10 cm³/g or less, 6 cm³/g or more and 8 cm³/g or less, or 6.5 cm³/g or more and 7.5 cm³/g or less. The pore volume may be, for example, a measured value calculated through N₂ isotherm analysis obtained based on adsorption of liquid nitrogen.

As described above, the porous carbon material in the sulfur-carbon composite according to an aspect of the present disclosure may comprise the plurality of micropores to load the sulfur containing compound.

In an embodiment of the present disclosure, the porous carbon material may comprise the plurality of micropores on the outer surface and inside thereof, and in this instance, the micropores may comprise meso-pores having the diameter of 1 nm or more and less than 50 nm and macro-pores having the diameter of 50 nm or more and 200 nm or less. In an embodiment of the present disclosure, the porous carbon material may have a uniform distribution of the meso-pores and the macro-pores.

The diameter of the micropores may be measured by a method for measuring the pore diameter of porous materials as known in the technical field, and the measurement method is not limited to a particular type. For example, the average diameter of the micropores may be measured by scanning electron microscopy (SEM), field emission electron microscopy or a laser diffraction method. The measurement using the laser diffraction method may use, for example, a commercially available laser diffraction particle size measuring instrument (for example, Microtrac MT 3000).

In another embodiment of the present disclosure, the average pore diameter (D50) of the porous carbon material may be, for example, 20 nm to 25 nm, but is not limited thereto. The average diameter (D50) refers to a particle diameter at 50% in cumulative particle size distribution.

In the present disclosure, the sulfur compound is included in at least a portion of the inside of the pores and the outer surface of the porous carbon material having the above-described feature.

The sulfur compound may include, without limitation, any type of sulfur compound that may be used as the positive electrode active material in the lithium-sulfur secondary battery. For example, the sulfur compound may comprise inorganic sulfur (S₈), lithium polysulfide (Li₂Sₙ, 1≤n≤8), carbon sulfur polymer (C₂Sₓ)ₘ, 2.5≤x≤50, 2≤m) or a mixture thereof, but is not limited thereto.

The sulfur compound may be included in the sulfur-carbon composite by physical adsorption onto the porous carbon material, or chemical bonding such as covalent bond, van deer Waals bond, etc. between sulfur and carbon in the porous carbon material.

In an embodiment of the present disclosure, the porous carbon material and the sulfur compound may be, for example, included in the sulfur-carbon composite at a weight ratio of 1:9 to 9:1, and specifically 1:9 to 5:5, 1:9 to 4:6, 1:9 to 3:7 or 1:9 to 1.5:8.5. When the weight ratio of the porous carbon material and the sulfur compound in the sulfur-carbon composite is in the above-described range, since the sulfur compound is included in a large amount, it may be possible to increase the dynamic activity of the sulfur-carbon composite and improve conductivity by the porous carbon material, but the present disclosure is not limited thereto.

In another embodiment of the present disclosure, the amount of the sulfur compound in the sulfur-carbon composite may be, for example, 10 weight% or more, specifically 50 weight% or more, 60 weight% or more, 70 weight% or more, 80 weight% or more, or 85 weight% or more, based on the total weight of the sulfur-carbon composite. Additionally, the amount of the sulfur compound in the sulfur-carbon composite may be 50 weight% to 90 weight%, specifically 60 weight% to 90 weight%, 70 weight% to 90 weight% or 85 weight% to 90 weight% within the above-described range based on the total weight of the sulfur-carbon composite. When the amount of the sulfur compound in the sulfur-carbon composite is in the above-described range, since the sulfur compound is included in a large amount, it may be possible to increase the dynamic activity of the sulfur-carbon composite and improve conductivity by the porous carbon material, but the present disclosure is not limited thereto.

In an embodiment of the present disclosure, the average particle size (D50) of the sulfur-carbon composite may be, for example, 0.5 *µ*m to 200 *µ*m, 1 *µ*m to 150 *µ*m, or 10 *µ*m to 150 *µ*m. The particle size of the sulfur-carbon composite may be measured by SEM, field emission electron microscopy or a laser diffraction method. The measurement using the laser diffraction method may use, for example, a commercially available laser diffraction particle size measuring instrument (for example, Microtrac MT 3000). The average particle size (D50) refers to a particle size at 50% in cumulative particle size distribution.

In an embodiment of the present disclosure, the sulfur-carbon composite may have a Raman peak intensity ratio (I_{G}/I_{D} ratio) of 1 or less. For example, when the ratio of I_{G}/I_{D} is equal to or less than 1, it may be possible to prevent the reduction of efficiency in the combination with the sulfur containing compound or conversion reaction of lithium polysulfide due to too high surface crystallinity of the sulfur-carbon composite.

The Raman peak intensity ratio may be measured through the I_{G} and In values obtained from the spectrum of the carbon composite obtained via Raman spectroscopy. In the obtained spectrum, I_{G} denotes the peak (G-peak, 1573/cm) of a crystalline portion, and Iₙ denotes the peak (D-peak, 1309/cm) of an amorphous portion. Accordingly, in this instance, the smaller ratio value of I_{G}/I_{D}, the lower crystallinity.

In an embodiment of the present disclosure, the sulfur-carbon composite may be formed by mixing the porous carbon material with the sulfur compound and performing thermal treatment, but the manufacturing method of the present disclosure is not limited thereto.

Since the sulfur-carbon composite of the present disclosure as described above comprises the platy carbon material having high specific surface area and high pore volume, it may be possible to enhance sulfur loading and provide a plurality of active sites of oxidation/reduction reaction of sulfur, thereby improving battery efficiency and energy density when used in the positive electrode of the lithium-sulfur battery, but the mechanism of the present disclosure is not limited thereto.

In the sulfur-carbon composite of the present disclosure, the coating layer may comprise the above-described crosslinked polythiophene compound. For example, a weight ratio of the porous carbon material and the crosslinked polythiophene compound may be 99:1 to 85:15, or 99:1 to 90:10. Additionally, the weight ratio of the porous carbon material having the coating layer and the sulfur compound may be 3:7 to 4:6.

According to another aspect of the present disclosure, there is provided a method of manufacturing the sulfur-carbon composite, comprising steps of:
introducing the polythiophene compound into a dispersion of the porous carbon material to coat the polythiophene compound on at least one surface of the porous carbon material;
crosslinking the polythiophene compound coated on the porous carbon material to form the crosslinked polythiophene compound; and
loading a sulfur compound into the porous carbon material coated with the crosslinked polythiophene compound, wherein the polythiophene compound is represented by the following Formula 3. 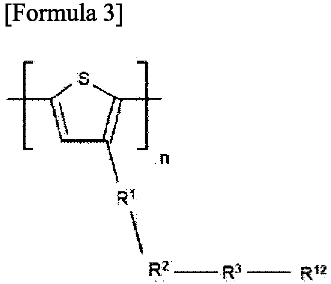
wherein in the Formula 3, each of R¹ and R³ is independently an alkylene group having 1 to 10 carbon atoms, a cycloalkylene group having 3 to 10 carbon atoms, or an arylene group having 6 to 20 carbon atoms, R² is an alkylene group having 1 to 10 carbon atoms, a cycloalkylene group having 3 to 10 carbon atoms, an arylene group having 6 to 20 carbon atoms or a -COO- group, R¹² is -NR¹⁰R¹¹, each of R¹⁰ and R¹¹ is independently hydrogen, an alkyl group having 1 to 10 carbon atoms, a cycloalkyl group having 3 to 10 carbon atoms, or an aryl group having 6 to 20 carbon atoms, and n is 1 to 1,000,000.

There is provided a method of manufacturing the sulfur-carbon composite, comprising steps of:
crosslinking the polythiophene compound to form the crosslinked polythiophene compound;
loading the sulfur compound into the porous carbon material; and
coating the crosslinked polythiophene compound on at least one surface of the sulfur compound loaded porous carbon material.

The sulfur-carbon composite according to the present disclosure may be manufactured by the above-described two manufacturing methods. For example, like the former manufacturing method, the crosslinked polythiophene compound may be formed by in-situ polymerization of the polythiophene compound in the porous carbon material, and the sulfur compound may be loaded into the porous carbon material coated with the crosslinked polythiophene compound.

Alternatively, like the latter manufacturing method, the crosslinked polythiophene compound may be formed by ex-situ polymerization of the polythiophene compound, and the crosslinked polythiophene compound may be coated on the sulfur compound loaded porous carbon material.

According to an embodiment of the present disclosure, the crosslinked polythiophene compound may be formed by adding a crosslinking agent to the porous carbon material coated with the polythiophene compound and performing thermal treatment.

A method of preparing the polythiophene compound may comprise steps of:
producing a thiophene monomer having a thiophene group and a cationic functional group;
introducing the thiophene monomer into a dispersion of the porous carbon material; and
polymerizing the thiophene monomer.

The step of producing the thiophene monomer may comprise steps of:
preparing a thiophene compound having an anionic functional group;
causing the thiophene compound to react with chloride; and
causing the thiophene compound subjected to the reaction with the chloride to react with a cationic alcohol compound to produce the thiophene monomer.

The thiophene compound may be represented by the following Formula 4.

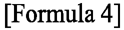

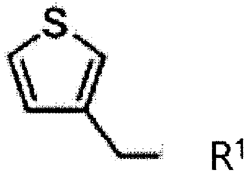

In the above Formula 4, R¹ may be an anionic functional group, and for example, the anionic functional group may comprise at least one of -COOH, -SO₃H, -PhOH or - ArSO₃H.

According to an embodiment of the present disclosure, the chloride may be a variety of chlorides comprising -Cl, and when the R¹ is -COOH and the chloride is SOCl₂, the thiophene compound subjected to the reaction with the chloride may have the following Formula 5.

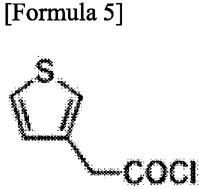

According to an embodiment of the present disclosure, the thiophene monomer may be produced by the reaction between the thiophene compound (for example, the compound represented by Formula 5) subjected to the reaction with the chloride and the alcohol compound having the cationic functional group.

For example, the alcohol compound may be 2-dimethylaminoethanol, and the thiophene monomer may be represented by the following Formula 6.

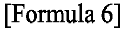

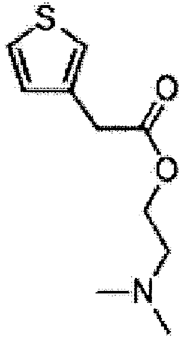

Since the crosslinked polythiophene compound having the cationic functional group is coated on the porous carbon material, the migration of lithium polysulfide leaking from the positive electrode of the lithium-sulfur battery to the negative electrode may be prevented by the cationic functional group. Accordingly, it may be possible to prevent sulfur particle accumulation on the lithium metal surface of the negative electrode, thereby maintaining the charge and discharge capacity of the lithium-sulfur battery and improving battery life.

The method of manufacturing the sulfur-carbon composite according to an embodiment of the present disclosure may be as follows.

First, as described above, the thiophene compound having the anionic functional group (for example, -COOH) is prepared, and undergoes the reaction with the chloride (for example, SOCl₂) in a solvent at high temperature (for example, 80°C to 100°C).

Here, the solvent is not limited to a particular type and may include any type of solvent capable of dissolving or dispersing compounds. The solvent may be, for example, a chlorine-based solvent such as chloroform, methylene chloride, 1,2-dichloroethane, 1,1,2-trichloroethane, chlorobenzene, o-dichlorobenzene; an ether-based solvent such as tetrahydrofuran, dioxane; an aromatic hydrocarbon-based solvent such as toluene, xylene, trimethylbenzene, mesitylene; an aliphatic hydrocarbon-based solvent such as cyclohexane, methylcyclohexane, n-pentane, n-hexane, n-heptane, n-octane, n-nonane, n-decane; a ketone-based solvent such as acetone, methylethylketone, cyclohexanone; an ester-based solvent such as ethyl acetate, butyl acetate, ethyl cellosolve acetate; a multivalent alcohol such as ethyleneglycol, ethyleneglycolmonobutylether, ethyleneglycolmonoethylether, ethyleneglycolmonomethylether, dimethoxyethane, propyleneglycol, diethoxy methane, triethyleneglycolmonoethylether, glycerin, 1,2-hexanedio and its derivatives; an alcohol-based solvent such as methanol, ethanol, propanol, isopropanol, cyclohexanol; a sulfoxide-based solvent such as dimethylsulfoxide; an amide-based solvent such as N-methyl-2-pyrrolidone, N,N-dimethylformamide; a benzoate-based solvent such as butylbenzoate, methyl-2-methoxybenzoate; tetralin; 3-phenoxy-toluene.

The thiophene monomer may be produced by reaction between the thiophene compound subjected to the reaction with the chloride, and for example, 2-dimethylaminoethanol and triethylene amine (TEA) in the solvent. Subsequently, the thiophene monomer may be dissolved in the solvent, and then introduced into the solution in which the porous carbon material (for example, ketjen black (KB)) is dispersed together with the chloride (for example, FeCl₃), to form the polythiophene compound by in-situ polymerization of the thiophene monomer on the surface of the porous carbon material.

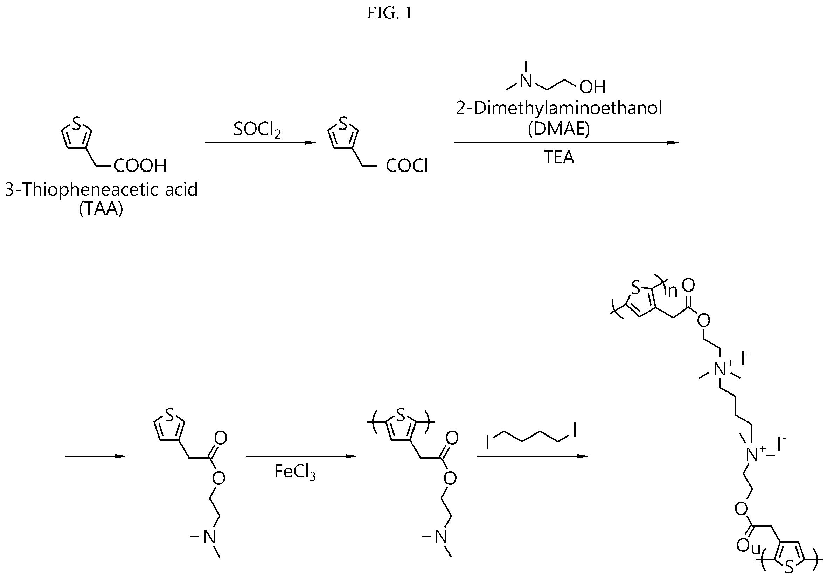

The crosslinking agent may be added to the dispersion of the porous carbon material coated with the polythiophene compound, and thermally treated to form the crosslinked polythiophene compound. For example, the crosslinking agent may be a dihalogenoalkane compound (for example, 1,4-dibromobutane, 1,4-dichlorobutane, diiodobutane, dichlorobutane and a mixture thereof, and as shown in FIG. 1, may be diiodobutane.

Hereinafter, specific examples will be described in detail to help better understanding of the present disclosure. However, the examples according to the present disclosure may be modified in many other forms, and the scope of the present disclosure should not be interpreted as being limited to the following examples. The examples of the present disclosure are provided to fully explain the present disclosure to persons having ordinary skill in the art.

### Example 1

### Preparation of sulfur-carbon composite and positive electrode

A thiophene compound having -COOH as an anionic functional group was prepared, and undergone reaction with SOCl₂ as chloride in a solvent at 90°C. Here, for the solvent, benzene was used.

The thiophene compound subjected to the reaction with the chloride was dissolved in a methylene chloride solvent, and 2-dimethylaminoethanol and triethyleneamine (TEA) were added to produce a thiophene monomer. The thiophene monomer was dissolved in a chloroform solvent and introduced into the chloroform solvent in which ketjen black (KB) as the porous carbon material and FeCl₃ as the chloride were dispersed, followed by 3-hour sonication. Subsequently, the polythiophene compound was formed by in-situ polymerization of the thiophene monomer on the surface of the ketjen black (see FIG. 1).

Diiodobutane as a crosslinking agent was added to the dispersion of the porous carbon material coated with the polythiophene compound, and a dialkyl amine group which is the cationic functional group of the polythiophene compound was activated by the crosslinking agent to crosslink the polythiophene compound, yielding the crosslinked polythiophene compound.

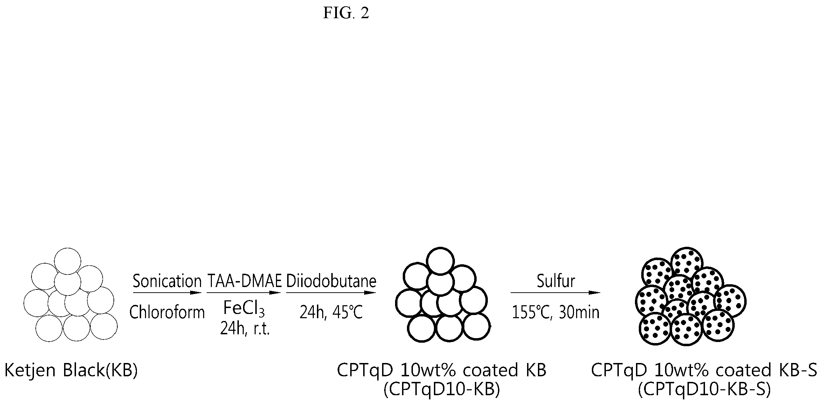

For a positive electrode active material, a sulfur-carbon composite (CPTqD10-KB-S) was used, the sulfur-carbon composite prepared by loading a sulfur compound into the ketjen black (CPTqD10-KB) coated with the crosslinked polythiophene compound. A weight ratio of the ketjen black and the crosslinked polythiophene compound was 90:10. The sulfur-carbon composite, polyacrylic acid (PAA) (weight average molecular weight 450,000) as a binder and Super P as a carbon conductive material were mixed at a weight ratio of 85:10:5, 0.5 wt% of polyvinyl alcohol (PVA) (weight average molecular weight 9,500) as a dispersant was added to prepare a positive electrode slurry having the solid concentration of 18 wt%, and the positive electrode slurry was uniformly applied on an aluminum foil to the thickness of 400 um and dried at 50°C to make a positive electrode (see FIG. 2).

### Preparation of lithium-sulfur battery

For a separator, a polyethylene porous film (Celgard separator) was used, and for a negative electrode, lithium metal was used. 1.0 M LiNO₃ was added to a mixed solvent of 1,3-dioxolane (DOL) and 1,2-dimethylether at a volume ratio (v/v) of 50 : 50 to prepare an electrolyte solution for a lithium-sulfur secondary battery.

The positive electrode and the negative electrode prepared as described above were placed with the separator interposed between them to make an electrode assembly, and the electrode assembly was put into a coin cell case and the prepared electrolyte solution was injected to prepare a coin cell type lithium-sulfur battery.

### Example 2

### Preparation of sulfur-carbon composite and positive electrode

The sulfur compound was loaded into the ketjen black, and then the crosslinked polythiophene compound was coated on the sulfur compound loaded ketjen black. That is, the crosslinked polythiophene compound was made and coated by ex-situ polymerization of the polythiophene compound, and the weight ratio of the ketjen black and the crosslinked polythiophene compound was 99:1.

### Preparation of lithium-sulfur battery

A lithium-sulfur battery was prepared by the same method as example 1 except that the positive electrode prepared in example 2 was used.

### Example 3

### Preparation of sulfur-carbon composite and positive electrode

A sulfur-carbon composite and a positive electrode were prepared by the same method as example 2 except that the weight ratio of the ketjen black and the crosslinked polythiophene compound was 93:7.

### Preparation of lithium-sulfur battery

A lithium-sulfur battery was prepared by the same method as example 1 except that the positive electrode prepared in example 3 was used.

### Example 4

### Preparation of sulfur-carbon composite and positive electrode

A sulfur-carbon composite and a positive electrode were prepared by the same method as example 2 except that the weight ratio of the ketjen black and the crosslinked polythiophene compound was 95:5.

### Preparation of lithium-sulfur battery

A lithium-sulfur battery was prepared by the same method as example 1 except that the positive electrode prepared in example 4 was used.

### Example 5

### Preparation of sulfur-carbon composite and positive electrode

A sulfur-carbon composite and a positive electrode were prepared by the same method as example 1 except that the weight ratio of the ketjen black and the crosslinked polythiophene compound was 95:5.

### Preparation of lithium-sulfur battery

A lithium-sulfur battery was prepared by the same method as example 1 except that the positive electrode prepared in example 5 was used.

### Comparative example 1

### Preparation of sulfur-carbon composite and positive electrode

A sulfur-carbon composite and a positive electrode were prepared by the same method as example 1 except that the sulfur-carbon composite in which the ketjen black and the sulfur compound were mixed at the weight ratio 3:7 was used as the positive electrode active material.

### Preparation of lithium-sulfur battery

A lithium-sulfur battery was prepared by the same method as example 1 except that the positive electrode prepared in comparative example 1 was used.

### Analysis results

### Thermogravimetric analysis (TGA) results

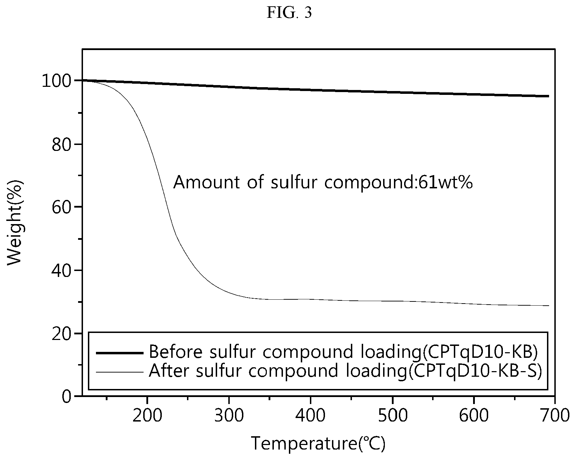

FIG. 3 shows TGA analysis results of the sulfur-carbon composite of example 1. According to the TGA analysis results, the loading amount of the sulfur compound in the sulfur-carbon composite comprising the ketjen black coated with the crosslinked polythiophene compound and the sulfur compound was 61 wt% when measured.

### X-ray diffraction (XRD) analysis results

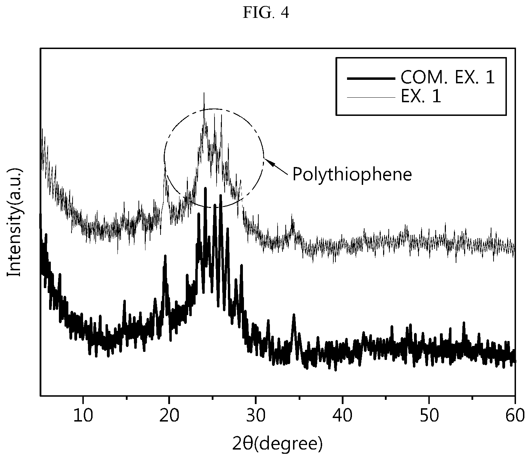

FIG. 4 shows XRD analysis results of the sulfur-carbon composites of example 1 and comparative example 1. According to the XRD analysis results, peaks of the crosslinked polythiophene compound of example 1 were observed at 2θ=25±5°.

### Fourier transform infrared spectroscopy (FT-IR) analysis results

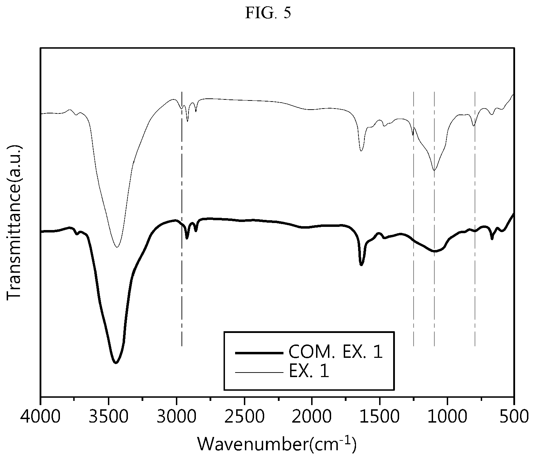

FIG. 5 shows FT-IR analysis results of the sulfur-carbon composites of example 1 and comparative example 1. According to the FT-IR analysis results, there were characteristic peaks of the crosslinked polythiophene compound of example 1 and the quaternary ammonium functional group included in it.

### Transmission electron microscopy (TEM) analysis results

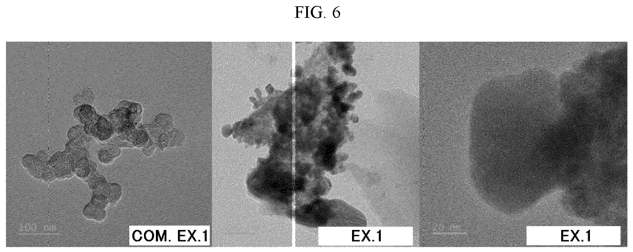

FIG. 6 shows TEM analysis results of the sulfur-carbon composites of example 1 and comparative example 1. According to the TEM analysis results, it was confirmed that the crosslinked polythiophene compound was coated on the ketjen black of example 1.

### Scanning electron microscopy (SEM) analysis results (surface observation)

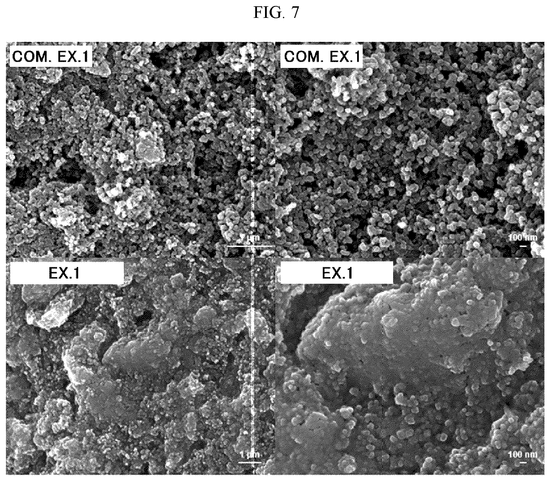

FIG. 7 shows SEM analysis results of the sulfur-carbon composites of example 1 and comparative example 1. According to the SEM analysis results, it was confirmed that the crosslinked polythiophene compound was coated on the ketjen black of example 1.

### Charge/discharge evaluation

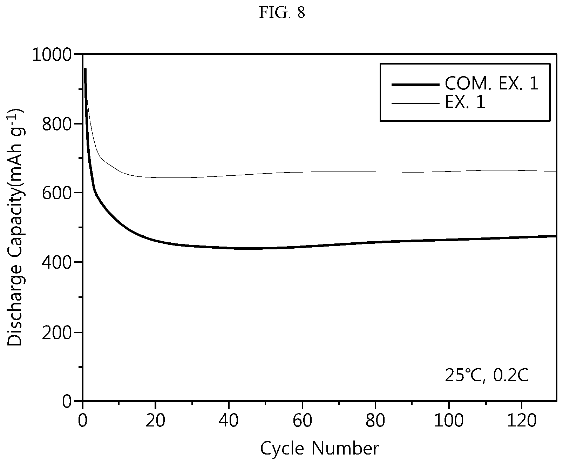

FIG. 8 is a graph showing discharge capacity evaluated by charging/discharging the lithium-sulfur batteries of the according to example 1 and comparative example 1 at 25°C in the following conditions.
Tester: WBSC3000 battery cycler (WonAtech)
Current density: 0.2 C-rate

Referring to FIG. 8, the lithium-sulfur battery according to example 1 had higher discharge capacity than the lithium-sulfur battery according to comparative example 1 for 1 cycle to 120 cycles when measured.

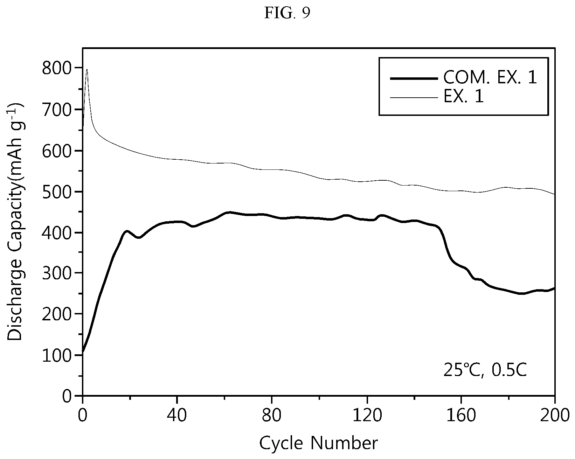

FIG. 9 is a graph showing discharge capacity evaluated by charging/discharging the lithium-sulfur batteries according to example 1 and comparative example 1 at 25°C in the following conditions.
Tester: WBSC3000 battery cycler (WonAtech)
Current density: 0.5 C-rate

Referring to FIG. 9, the lithium-sulfur battery according to example 1 had higher discharge capacity than the lithium-sulfur battery according to comparative example 1 for 1 cycle to 200 cycles when measured.

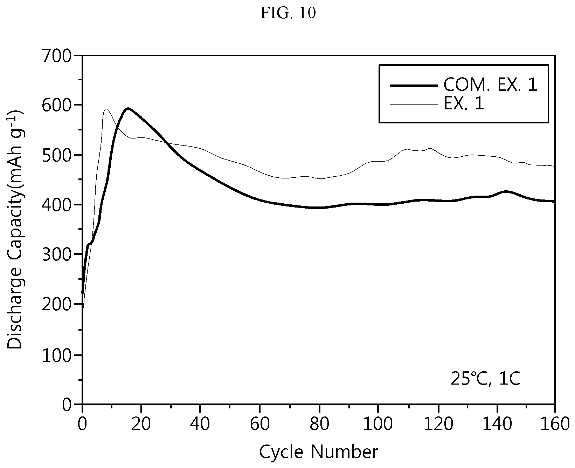

FIG. 10 is a graph showing discharge capacity evaluated by charging/discharging the lithium-sulfur batteries according to example 1 and comparative example 1 at 25°C in the following conditions.
Tester: WBSC3000 battery cycler (WonAtech)
Current density: 1 C-rate

Referring to FIG. 10, the lithium-sulfur battery according to example 1 had higher discharge capacity than the lithium-sulfur battery according to comparative example 1 for 40 cycles to 160 cycles when measured.

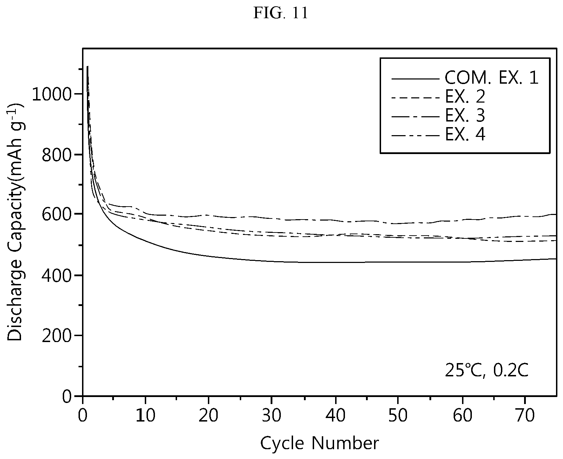

FIG. 11 is a graph showing discharge capacity evaluated by charging/discharging the lithium-sulfur batteries according to comparative example 1 and examples 2 to 4 at 25°C in the following conditions.
Tester: WBSC3000 battery cycler (WonAtech)
Current density: 0.2 C-rate

Referring to FIG. 11, the lithium-sulfur batteries according to examples 2 to 4 had higher discharge capacity than the lithium-sulfur battery according to comparative example 1 for 1 cycle to 70 cycles when measured.

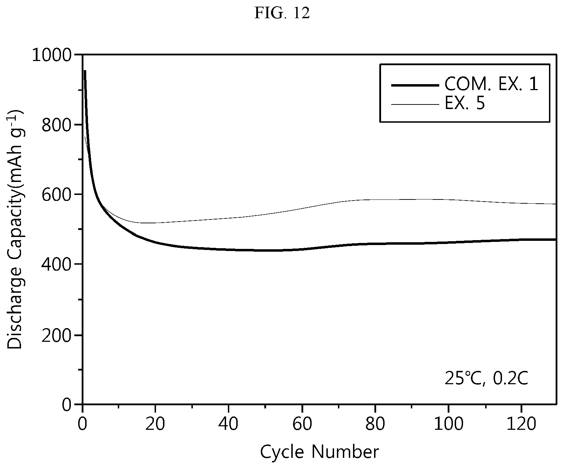

FIG. 12 is a graph showing discharge capacity evaluated by charging/discharging the lithium-sulfur batteries according to example 5 and comparative example 1 at 25°C in the following conditions.
Tester: WBSC3000 battery cycler (WonAtech)
Current density: 0.2 C-rate

Referring to FIG. 12, the lithium-sulfur battery according to example 5 had higher discharge capacity than the lithium-sulfur battery according to comparative example 1 for 1 cycle to 120 cycles when measured.

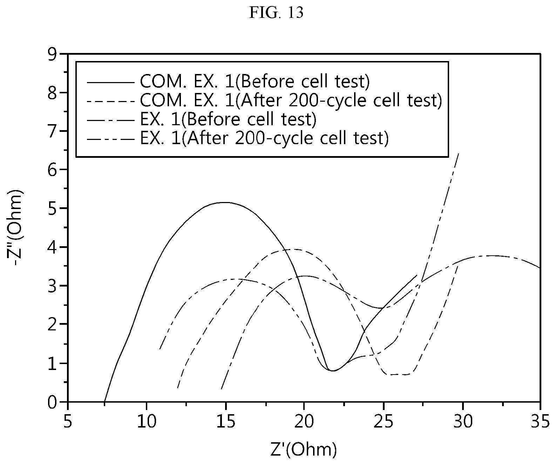

FIG. 13 is a Nyquist plot of the resistance of the lithium-sulfur batteries of example 1 and comparative example 1 before/after the 200-cycle cell test at 0.5 C-rate. Referring to FIG. 13, the lithium-sulfur battery according to example 1 had an improved resistance value before/after the cell test compared to the lithium-sulfur battery according to comparative example 1 when measured.

## Claims

1. A crosslinked polythiophene compound having a crosslinking structure and comprising a cationic functional group,
wherein the crosslinked polythiophene compound is represented by the following Formula 1. 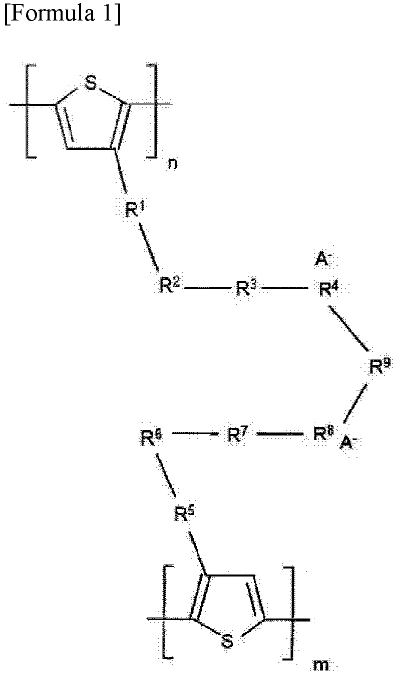
wherein in the Formula 1, each of R¹, R³, R⁵, R⁷ and R⁹ is independently an alkylene group having 1 to 10 carbon atoms, a cycloalkylene group having 3 to 10 carbon atoms, or an arylene group having 6 to 20 carbon atoms, each of R² and R⁶ is independently an alkylene group having 1 to 10 carbon atoms, a cycloalkylene group having 3 to 10 carbon atoms, an arylene group having 6 to 20 carbon atoms or a -COO- group, R⁴ and R⁸ are -NR¹⁰R¹¹, and each of R¹⁰ and R¹¹ is independently hydrogen, an alkyl group having 1 to 10 carbon atoms, a cycloalkyl group having 3 to 10 carbon atoms, or an aryl group having 6 to 20 carbon atoms, A is F, Cl, Br, or I, and each of n and m is independently 1 to 1,000,000.

2. The crosslinked polythiophene compound according to claim 1, wherein the crosslinked polythiophene compound is represented by the following Formula 2. 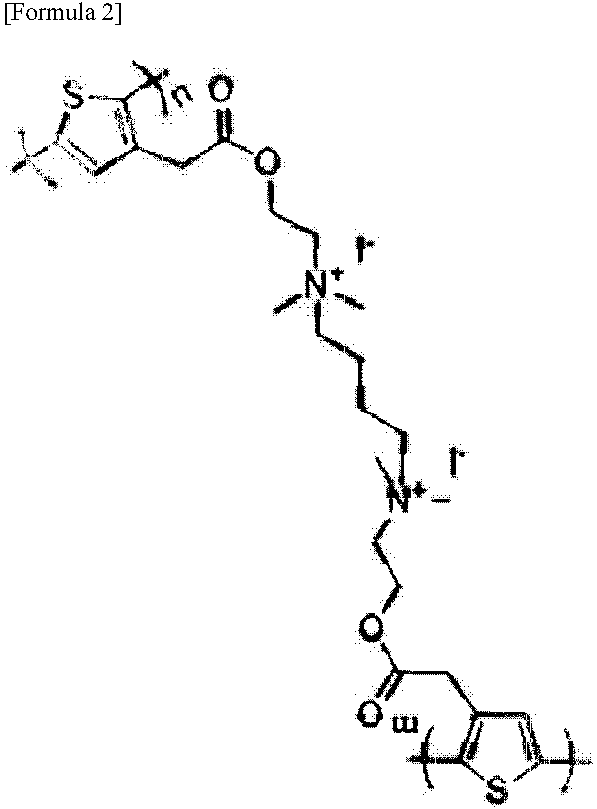 wherein in the Formula 2, each of n and m is independently 1 to 1,000,000.

3. A sulfur-carbon composite, comprising:
a porous carbon material;
a coating layer disposed on at least one surface of the porous carbon material, and comprising the crosslinked polythiophene compound according to claim 1; and
a sulfur compound present in at least a portion of a surface of the porous carbon material or inside of pores of the porous carbon material, or a surface of the coating layer.

4. The sulfur-carbon composite according to claim 3, wherein a weight ratio of the porous carbon material and the crosslinked polythiophene compound is 99:1 to 85:15.

5. The sulfur-carbon composite according to claim 3, wherein a weight ratio of the porous carbon material having the coating layer and the sulfur compound is 3:7 to 4:6.

6. A lithium-sulfur battery, comprising:
a positive electrode, a negative electrode, and a separator interposed between the positive electrode and the negative electrode,
wherein the positive electrode comprises the sulfur-carbon composite according to claim 3.

7. A method of manufacturing the sulfur-carbon composite according to claim 3, the method comprising steps of:
introducing the polythiophene compound into a dispersion of the porous carbon material to coat the polythiophene compound on at least one surface of the porous carbon material;
crosslinking the polythiophene compound coated on the porous carbon material to form the crosslinked polythiophene compound; and
loading the sulfur compound into the porous carbon material coated with the crosslinked polythiophene compound,
wherein the polythiophene compound is represented by the following Formula 3. 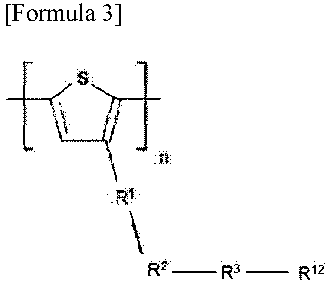
wherein in the Formula 3, each of R¹ and R³ is independently an alkylene group having 1 to 10 carbon atoms, a cycloalkylene group having 3 to 10 carbon atoms, or an arylene group having 6 to 20 carbon atoms, R² is an alkylene group having 1 to 10 carbon atoms, a cycloalkylene group having 3 to 10 carbon atoms, an arylene group having 6 to 20 carbon atoms or a -COO- group, R¹² is -NR¹⁰R¹¹, each of R¹⁰ and R¹¹ is independently hydrogen, an alkyl group having 1 to 10 carbon atoms, a cycloalkyl group having 3 to 10 carbon atoms, or an aryl group having 6 to 20 carbon atoms, and n is 1 to 1,000,000.

8. The method of manufacturing the sulfur-carbon composite according to claim 7, wherein the crosslinked polythiophene compound is formed by adding a crosslinking agent to the porous carbon material coated with the polythiophene compound, and performing thermal treatment.

## Patentansprüche

1. Vernetzte Polythiophenverbindung mit einer Vernetzungsstruktur und umfassend eine kationische funktionelle Gruppe,
wobei die vernetzte Polythiophenverbindung durch die folgende Formel 1 dargestellt ist. 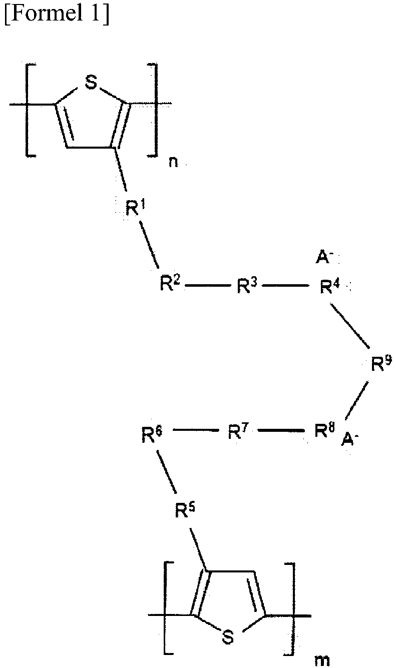
wobei in der Formel 1 jedes von R¹, R³, R⁵, R⁷ und R⁹ unabhängig eine Alkylengruppe mit 1 bis 10 Kohlenstoffatomen, eine Cycloalkylengruppe mit 3 bis 10 Kohlenstoffatomen oder eine Arylengruppe mit 6 bis 20 Kohlenstoffatomen ist, jedes von R² und R⁶ unabhängig eine Alkylengruppe mit 1 bis 10 Kohlenstoffatomen, eine Cycloalkylengruppe mit 3 bis 10 Kohlenstoffatomen, eine Arylengruppe mit 6 bis 20 Kohlenstoffatomen oder eine -COO-Gruppe ist, R⁴ und R⁸ -NR¹⁰R¹¹ sind und jedes von R¹⁰ und R¹¹ unabhängig Wasserstoff, eine Alkylgruppe mit 1 bis 10 Kohlenstoffatomen, eine Cycloalkylgruppe mit 3 bis 10 Kohlenstoffatomen oder eine Arylgruppe mit 6 bis 20 Kohlenstoffatomen ist, A F, Cl, Br oder I ist und jedes von n und m unabhängig 1 bis 1.000.000 ist.

2. Vernetzte Polythiophenverbindung nach Anspruch 1, wobei die vernetzte Polythiophenverbindung durch die folgende Formel 2 dargestellt ist: 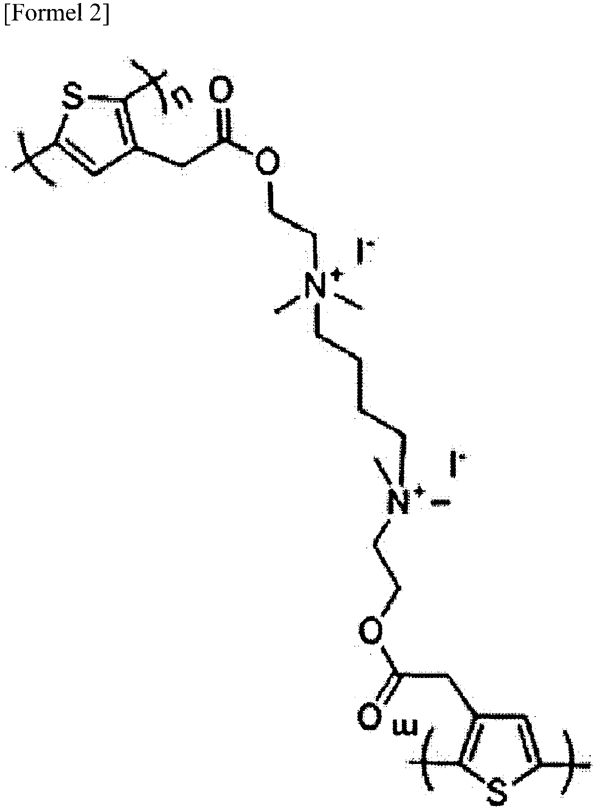 wobei in der Formel 2 jedes von n und m unabhängig 1 bis 1.000.000 ist.

3. Schwefel-Kohlenstoff-Verbundstoff, umfassend:
ein poröses Kohlenstoffmaterial;
eine Beschichtungsschicht, die auf mindestens einer Oberfläche des porösen Kohlenstoffmaterials angeordnet ist und die vernetzte Polythiophenverbindung nach Anspruch 1 umfasst; und
eine Schwefelverbindung, die in mindestens einem Teil einer Oberfläche des porösen Kohlenstoffmaterials oder innerhalb von Poren des porösen Kohlenstoffmaterials oder einer Oberfläche der Beschichtungsschicht vorhanden ist.

4. Schwefel-Kohlenstoff-Verbundstoff nach Anspruch 3, wobei ein Gewichtsverhältnis des porösen Kohlenstoffmaterials und der vernetzten Polythiophenverbindung 99:1 bis 85:15 beträgt.

5. Schwefel-Kohlenstoff-Verbundstoff nach Anspruch 3, wobei ein Gewichtsverhältnis des porösen Kohlenstoffmaterials mit der Beschichtungsschicht und der Schwefelverbindung 3:7 bis 4:6 beträgt.

6. Lithium-Schwefel-Batterie, umfassend:
eine positive Elektrode, eine negative Elektrode und einen Separator, der zwischen der positiven Elektrode und der negativen Elektrode angeordnet ist,
wobei die positive Elektrode den Schwefel-Kohlenstoff-Verbundstoff nach Anspruch 3 umfasst.

7. Verfahren zur Herstellung des Schwefel-Kohlenstoff-Verbundstoffs nach Anspruch 3, wobei das Verfahren die folgenden Schritte umfasst:
Einbringen der Polythiophenverbindung in eine Dispersion des porösen Kohlenstoffmaterials, um die Polythiophenverbindung auf mindestens einer Oberfläche des porösen Kohlenstoffmaterials zu beschichten;
Vernetzen der Polythiophenverbindung, die auf das poröse Kohlenstoffmaterial beschichtet ist, um die vernetzte Polythiophenverbindung zu bilden; und
Laden der Schwefelverbindung in das poröse Kohlenstoffmaterial, das mit der vernetzten Polythiophenverbindung beschichtet ist,
wobei die Polythiophenverbindung durch die folgende Formel 3 dargestellt ist: 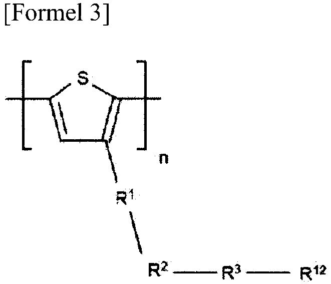
wobei in der Formel 3 jedes von R¹ und R³ unabhängig eine Alkylengruppe mit 1 bis 10 Kohlenstoffatomen, eine Cycloalkylengruppe mit 3 bis 10 Kohlenstoffatomen oder eine Arylengruppe mit 6 bis 20 Kohlenstoffatomen ist, R² eine Alkylengruppe mit 1 bis 10 Kohlenstoffatomen, eine Cycloalkylengruppe mit 3 bis 10 Kohlenstoffatomen, eine Arylengruppe mit 6 bis 20 Kohlenstoffatomen oder eine -COO-Gruppe ist, R¹² -NR¹⁰R¹¹ ist, jedes von R¹⁰ und R¹¹ unabhängig Wasserstoff, eine Alkylgruppe mit 1 bis 10 Kohlenstoffatomen, eine Cycloalkylgruppe mit 3 bis 10 Kohlenstoffatomen oder eine Arylgruppe mit 6 bis 20 Kohlenstoffatomen ist und n 1 bis 1.000.000 ist.

8. Verfahren zur Herstellung des Schwefel-Kohlenstoff-Verbundstoffs nach Anspruch 7, wobei die vernetzte Polythiophenverbindung durch Zugeben eines Vernetzungsmittels zu dem porösen Kohlenstoffmaterial, das mit der Polythiophenverbindung beschichtet ist, und Durchführen einer Wärmebehandlung gebildet wird.

## Revendications

1. Composé de polythiophène réticulé ayant une structure réticulée et comprenant un groupe fonctionnel cationique,
dans lequel le composé de polythiophène réticulé est représenté par la Formule 1 ci-après. 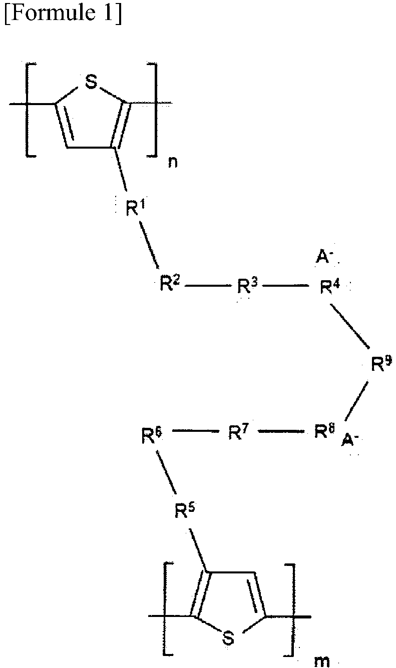
dans lequel dans la Formule 1, R¹, R³, R⁵, R⁷ et R⁹ sont chacun indépendamment un groupe alkylène ayant 1 à 10 atomes de carbone, un groupe cycloalkylène ayant 3 à 10 atomes de carbone ou un groupe arylène ayant 6 à 20 atomes de carbone, R² et R⁶ sont chacun indépendamment un groupe alkylène ayant 1 à 10 atomes de carbone, un groupe cycloalkylène ayant 3 à 10 atomes de carbone, un groupe arylène ayant 6 à 20 atomes de carbone ou un groupe -COO-, R⁴ et R⁸ sont -NR¹⁰R¹¹, et R¹⁰ et R¹¹ sont chacun indépendamment un hydrogène, un groupe alkyle ayant 1 à 10 atomes de carbone, un groupe cycloalkyle ayant 3 à 10 atomes de carbone ou un groupe aryle ayant 6 à 20 atomes de carbone, A est F, Cl, Br ou I, et n et m sont chacun indépendamment 1 à 1 000 000.

2. Composé de polythiophène réticulé selon la revendication 1, dans lequel le composé de polythiophène réticulé est représenté par la Formule 2 ci-après. 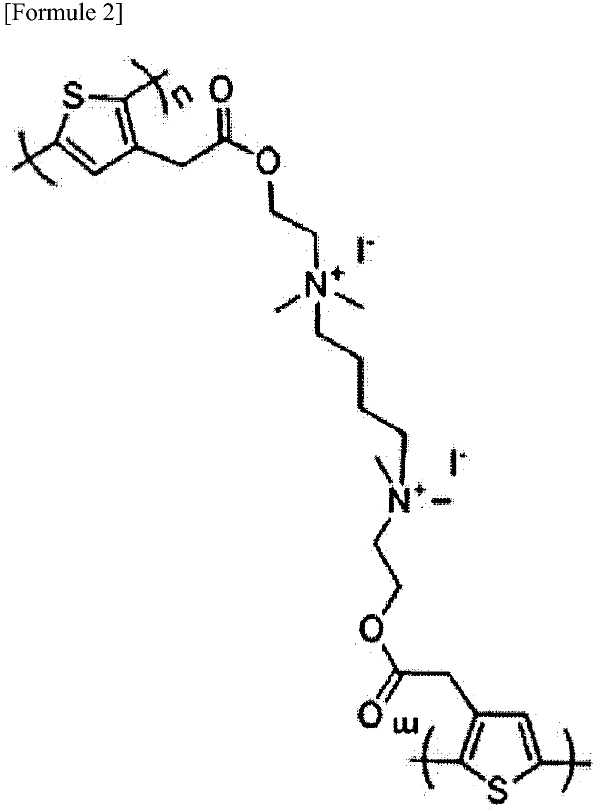 dans lequel dans la Formule 2, n et m sont chacun indépendamment 1 à 1 000 000.

3. Composite de soufre-carbone, comprenant :
un matériau carboné poreux ;
une couche de revêtement disposée sur au moins une surface du matériau carboné poreux, et comprenant le composé de polythiophène réticulé selon la revendication 1 ; et
un composé de soufre présent dans au moins une partie d'une surface du matériau carboné poreux ou à l'intérieur des pores du matériau carboné poreux, ou une surface de la couche de revêtement.

4. Composite de soufre-carbone selon la revendication 3, dans lequel un rapport en poids du matériau carboné poreux et du composé de polythiophène réticulé est 99:1 à 85:15.

5. Composite de soufre-carbone selon la revendication 3, dans lequel un rapport en poids du matériau carboné poreux ayant la couche de revêtement et le composé de soufre est 3:7 à 4:6.

6. Batterie au lithium-soufre, comprenant :
une électrode positive, une électrode négative et un séparateur interposé entre l'électrode positive et l'électrode négative,
dans lequel l'électrode positive comprend le composite de soufre-carbone selon la revendication 3.

7. Procédé de fabrication du composite de soufre-carbone selon la revendication 3, le procédé comprenant les étapes consistant à :
introduire le composé de polythiophène dans une dispersion du matériau carboné poreux pour revêtir le composé de polythiophène sur au moins une surface du matériau carboné poreux ;
réticuler le composé de polythiophène revêtu sur le matériau carboné poreux pour former le composé de polythiophène réticulé ; et
charger le composé de soufre dans le matériau carboné poreux revêtu avec le composé de polythiophène réticulé,
dans lequel le composé de polythiophène est représenté par la Formule 3 ci-après. 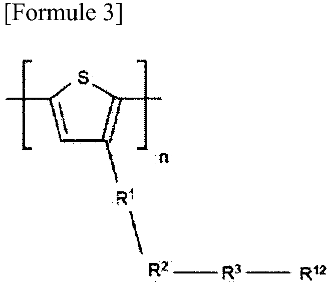
dans lequel dans la Formule 3, R¹ et R³ sont chacun indépendamment un groupe alkylène ayant 1 à 10 atomes de carbone, un groupe cycloalkylène ayant 3 à 10 atomes de carbone, ou un groupe arylène ayant 6 à 20 atomes de carbone, R² est un groupe alkylène ayant 1 à 10 atomes de carbone, un groupe cycloalkylène ayant 3 à 10 atomes de carbone, un groupe arylène ayant 6 à 20 atomes de carbone ou un groupe -COO-, R¹² est -NR¹⁰R¹¹, R¹⁰ et R¹¹ sont chacun indépendamment un hydrogène, un groupe alkyle ayant 1 à 10 atomes de carbone, un groupe cycloalkyle ayant 3 à 10 atomes de carbone ou un groupe aryle ayant 6 à 20 atomes de carbone, et n est 1 à 1 000 000.

8. Procédé de fabrication du composite de soufre-carbone selon la revendication 7, dans lequel le composé de polythiophène réticulé est formé en ajoutant un agent de réticulation au matériau carboné poreux revêtu du composé de polythiophène, et en effectuant un traitement thermique.
